# EUROPEAN PATENT APPLICATION

(11) **EP 2 308 702 A1**
(43) Date of publication of application: **13.04.2011**
(21) Application number: 10186614.3
(22) Date of filing: 05.10.2010
(51) Int. Cl.: B60G 11/22, B62D 63/06

(54) **Trailer**

(30) Priority: 06.10.2009 NL 2003603
(71) Applicant: Wagenbouw Hapert B.V., 5527 AL Hapert (NL)
(72) Inventor: Sanders, Leonardus Cornelis Maria, 5507RN, Veldhoven (NL); Reijnen, Ralph Henricus Franciscus, 5042 CN, Tilburg (NL); Oom, Dennis Henri Johannes, 6052 GC, Maasbracht (NL); Linden, van der, Mark, 5527 KV, Hapert (NL); Limpt, van, Ed, 5529 BA, Casteren (NL); Castelijns, Henk, 5511 JK, Eersel (NL)
(74) Representative: Verhees, Godefridus Josephus Maria

(57) **Abstract**

The trailer 1 has a loading plaform which comprises a loading deck 3 and upright walls 5 along the periphery of the loading deck and connected to the loading deck. A cross beam 7 is fitted under the loading deck and is connected to the loading deck, and a pole 9 which is fitted at right angles to the cross beam is also fitted to the cross beam.

The cross beam is fitted to the pole by means of two connecting elements 19. These connecting elements are formed by plates of which an upper part extends parallel to the pole 9 and is fitted to the pole 9 at locations 21 on either one of the two sides of and at a distance from the cross beam, and which plates are fitted in the middle with a lower part to the cross beam 7.

As a result of this, the fitting of the cross beam to the pole is such that a torque exerted on the cross beam can be supported by the pole. In consequence, the loading platform is loaded to a lesser extent, so that it may have a lighter construction.

## Description

### Field of the invention

The invention relates to a trailer comprising: a loading platform having a loading deck and upright walls present along its periphery and connected to the loading deck, a cross beam which is fitted under the loading deck and is connected to the loading deck, a pole which runs under the loading deck and is fitted at right angles to the cross beam, a torsion shaft which extends through the cross beam and projects with its ends through the cross beam and near both ends is connected to the cross beam via a resilient element, two wheel carriers fixed one on either one of the two ends of the torsion shaft, two wheels one rotatably connected to either one of the two wheel carriers, and at least one connecting element which is directly connected to the cross beam and, seen in axial direction of the pole, is connected directly to the pole on at least one side of and at a distance from the cross beam.

### State of the art

A trailer of this type is known from US 2005/0184485 A1. The known trailer has a collapsible chassis. For the purpose of this the cross beam can be turned relative to the pole. To enable this the connecting element is hingeably connected to the cross beam and the pole. The cross beam is furthermore connected to longitudinal beams of the chassis. The torsion load on the cross beam is supported by means of these longitudinal beams.

### Summary of the invention

It is an object of the invention to provide a trailer of the type defined in the opening paragraph which is lighter than the known trailer and still can properly support the torsion load acting on the cross beam during use. For this purpose the trailer according to the invention is **characterized in that** the connecting element is rigidly fitted both to the cross beam and to the pole. The connecting element is preferably fixed to the pole on either one of the two sides of the pole. Consequently, the fitting of the cross beam to the pole is such that it can cause a torque exerted on the cross beam to be supported by the pole. As a result, no chassis is needed for supporting the torque, which provides a lighter construction of the trailer.

It is observed that from US 5,161,814 also a trailer is known that has a cross beam which is connected to a pole via a connecting element. However, the pole does not extend as far as the cross beam and the connecting element is not rigidly connected to the cross beam either.

Furthermore, it is observed that from US 4,807,894 a trailer is known that has a cross beam that is connected to a pole. However, the cross beam is directly connected to the pole in this case and not via a connecting element to the pole at a distance from the cross beam, as a result of which torque can be supported to a lesser extent.

It is further observed that from US 7,401,804 a trailer is known that has a cross beam, a connecting element and a pole. However, in his case the pole is hingeably connected to the torsion shaft via the connecting element and not rigidly fixed to the cross beam.

Finally it is observed that from DE 195 43 600 A1 also a trailer is known that has a cross beam which is connected to a pole. However, the pole is detachably connected to a chassis which is flexibly connected to a torsion shaft by means of blocks and a connecting element. The cross beam runs parallel to and is present at a distance from the torsion shaft.

Preferably the connecting element is formed by a plate of which an upper part extends parallel to the pole and is fitted to the pole and of which a bottom part is fitted near the centre or in the centre to the cross beam.

Furthermore, the trailer preferably comprises a further connecting element so that there is one connecting element present on either one of the two sides of the pole.

An embodiment of the trailer according to the invention is **characterized in that** the trailer comprises two cross bars which are fitted under the loading deck and are fitted to the loading deck and the pole, which cross bars are positioned parallel to and at a distance from the cross beam, one cross bar being fitted on either one of the two sides of the cross beam. As a result of these cross bars the trailer nevertheless has a relative large load carrying capacity despite the light construction of the loading platform.

### Brief description of the drawings

The following description relating to the appended drawings, the whole given by way of non-limiting example of the trailer according to the invention, will provide better understanding of how the invention can be realized, in which:
Fig. 1 shows a perspective bias view of the trailer seen from below; and
Fig. 2 shows a side view of the cross beam of the trailer.

### Detailed description of the drawings

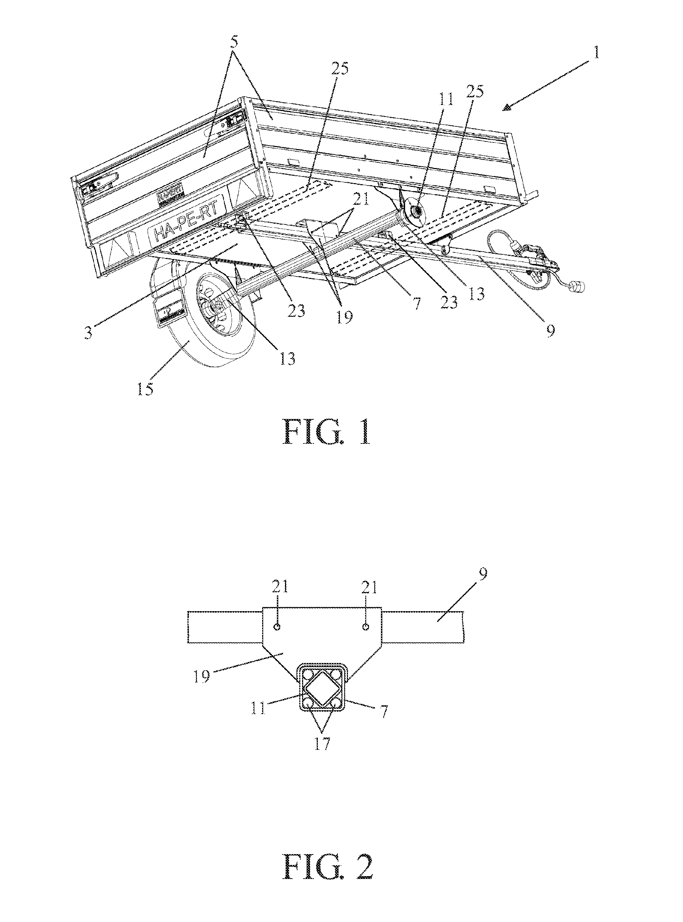

Fig. 1 shows an embodiment of the trailer according to the invention. The trailer 1 has a loading platform with a loading deck 3 and upright walls 5 connected to the loading deck along its periphery. Under the loading deck there is a cross beam 7 which is connected to the loading deck, and a pole 9 which is fitted perpendicular to the cross beam.

A torsion shaft 11 extends through the cross beam 7, the ends of the torison shaft protruding from the cross beam. Fitted to these ends are wheel carriers 13 to which wheels 15 are rotatably connected. The torsion shaft 11 is connected to the cross beam 7 near both ends by means of resilient elements 17, see Fig. 2.

The cross beam 7 is fitted to the pole by means of two connecting elements 19 with one connecting element being present on either one of the two sides of the cross beam. These connecting elements are formed by plates of which an upper part extends parallel to the pole and is fitted to the pole 9 at locations 21 on either one of the two sides of and at a distance from the cross beam, and which plates are fitted in the middle with a bottom part to the cross beam 7.

The pole 9 is connected to the loading deck 3 via the connecting element 19 and two supports 23. In lieu of or in addition to these supports 23 the trailer 1 may furthermore be equipped with two cross bars 25 (shown in dashed lines) which are connected to the loading deck and the pole 9 under the loading deck 3 and are present at a distance from and on either one of the two sides of the cross beam 7.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the spirit and scope defined by the claims.

## Claims

1. A trailer (1) comprising:
- a loading platform having a loading deck (3) and upright walls present along the periphery of the loading deck and connected to the loading deck,
- a cross beam (7) which is fitted under the loading deck and is connected to the loading deck,
- a pole (9) which runs at least up to the cross beam under the loading deck and is fitted at right angles to the cross beam,
- a torsion shaft (11) which extends through the cross beam and projects with its ends through the cross beam and near both ends is connected to the cross beam via a resilient element,
- two wheel carriers (13) fixed one on either one of the two ends of the torsion shaft,
- two wheels (15) one rotatably connected to either one of the two wheel carriers, and
- at least one connecting element (19) which is directly connected to the cross beam (7) and, seen in axial direction of the pole (9), is connected directly to the pole on at least one side of and at a distance from the cross beam,
**characterized in that** the connecting element (19) is rigidly fitted both to the cross beam (7) and to the pole (9).

2. A trailer (1) as claimed in claim 1, **characterized in that** the connecting element (19) is formed by a plate of which an upper part extends parallel to the pole and is fixed to the pole and of which a bottom part is fitted near the centre or in the centre to the cross beam (7).

3. A trailer (1) as claimed in claim 1 or 2, **characterized in that** the trailer comprises a further connecting element (19) so that there is one connecting element present on either one of the two sides of the pole (9).

4. A trailer (1) as claimed in any one of the preceding claims, **characterized in that** the trailer comprises two cross bars (25) which are fitted under the loading deck (3) and are fitted to the loading deck and the pole (9), which cross bars are positioned parallel to and at a distance from the cross beam (7), one cross bar being fitted on either one of the two sides of the cross beam.
